# EUROPÄISCHE PATENTANMELDUNG

(11) **EP 2 538 480 A1**
(43) Veröffentlichungstag der Anmeldung: **26.12.2012**
(21) Anmeldenummer: 12164590.7
(22) Anmeldetag: 18.04.2012
(51) Int. Cl.: H01M 8/04, F16K 31/06

(54) **Rezirkulationsanordnung zur Rezirkulation von Anodenabgasen einer Brennstoffzelle**

(30) Priorität: 22.06.2011 DE 102011105710
(71) Anmelder: Pierburg GmbH, 41460 Neuss (DE)
(72) Erfinder: Genster, Albert, 45768 Marl (DE)
(74) Vertreter: Patentanwälte ter Smitten Eberlein Rütten Partnerschaftsgesellschaft

(57) **Zusammenfassung**

Die Erfindung betrifft eine Rezirkulationsanordnung zur Rezirkulation von Anodenabgasen einer Brennstoffzelle (4) mit einem Rezirkulationsgebläse (24) und mindestens einer von einem Treibstrahl eines unter Druck stehenden Gases angetriebenen Strahlvorrichtung (28), wobei ein Anodenausgang (22) der Brennstoffzelle (4) mit einem Eingang des Rezirkulationsgebläses (24) fluidisch verbunden ist, ein Ausgang des Rezirkulationsgebläses (24) mit einem Anodeneingang (18) der Brennstoffzelle (4) fluidisch verbunden ist und ein Ausgang der Strahlvorrichtung (28) fluidisch mit einem Anodeneingang (18) der Brennstoffzelle (4) verbunden ist, wobei die Strahlvorrichtung (18) als variables Nadelventil ausgeführt ist.

## Beschreibung

Die Erfindung betrifft eine Rezirkulationsanordnung zur Rezirkulation von Anodenabgasen einer Brennstoffzelle mit einem Rezirkulationsgebläse und mindestens einer von einem Treibstahl eines unter Druck stehenden Gases angetriebenen Strahlvorrichtung, wobei ein Anodenausgang der Brennstoffzelle mit einem Eingang des Rezirkulationsgebläses fluidisch verbunden ist, ein Ausgang des Rezirkulationsgebläses mit einem Anodeneingang der Brennstoffzelle fluidisch verbunden ist und ein Ausgang der Strahlvorrichtung fluidisch mit einem Anodeneingang der Brennstoffzelle verbunden ist.

Derartige Rezirkulationsanordnungen für Brennstoffzellen sind hinlänglich bekannt. Solchen Brennstoffzellen werden Medien zugeführt. Diese Medien können typsicherweise Luft und Wasserstoff sein. Der in der Luft enthaltene Sauerstoff dient als Oxidationsmittel in einem Kathodenraum der Brennstoffzelle. Der dem Brennstoffzellensystem zugeführte Wasserstoff wird üblicherweise in einem Druckspeicher unter hohem Druck gespeichert und über eine Strahlvorrichtung einem Anodenraum der Brennstoffzelle zugeführt. Dem Kathodenraum der Brennstoffzelle wird Luft zugeführt. In der Brennstoffzelle reagiert dann der in der Luft enthaltene Sauerstoff mit dem Wasserstoff, wobei der Anodenraum und der Kathodenraum durch eine Membran getrennt sind. In der Brennstoffzelle entsteht dann elektrische Leistung, die über eine Steuereinheit einem Elektromotor zuführbar ist. Bei der Reaktion entsteht im Anodenraum ein Anodenabgas, das jedoch noch einen hohen Anteil an Wasserstoff aufweist. Durch die Rezirkulationsanordnung soll dieser Anteil Wasserstoff der erneuten Reaktion in der Brennstoffzelle wieder zugeführt werden. Mit dem Abgas wird jedoch auch Wasser und in den Anodenraum eindringende Inertgase, insbesondere Stickstoff, abgeführt.

Aus dem Stand der Technik (DE 10 2009 043 565 A1) ist es bekannt, hierzu ein Rezirkulationsgebläse einzusetzen. Dieses Rezirkulationsgebläse wird durch einen Elektromotor angetrieben, der durch seinen Stromverbrauch den Wirkungsgrad der Brennstoffzelle negativ beeinflusst.

Aus der DE 10251878 A1 ist es darüber hinaus bekannt, eine Strahlvorrichtung zu nutzen, die von einem Treibstrahl eines unter Druck stehenden Gases angetrieben wird, um das Gas, insbesondere Wasserstoff, zum Anodeneingang der Brennstoffzelle zu führen. Dabei kann auch der rezirkulierte Wasserstoff der Strahlvorrichtung zugeführt werden. Um die Förderung des Wasserstoffs aus einem Druckbehälter zu steuern, ist hierbei ein Regler vorgesehen. Eine derartige Anordnung ist sehr aufwändig in der Herstellung und benötigt einen größeren Bauraum.

Somit stellt sich die Aufgabe, eine Rezirkulationsanordnung zur Rezirkulation von Anodenabgasen bereit zu stellen, die die oben genannten Nachteile vermeidet.

Diese Aufgabe wird durch eine erfindungsgemäße Rezirkulationsanordnung dadurch gelöst, dass die Strahlvorrichtung als variables Nadelventil ausgeführt ist. Auf diese Art und Weise ist eine einfache Regelung des Treibstrahles des unter Druck stehenden Gases, insbesondere Wasserstoff, möglich. Die Montage einer derartigen Rezirkulationsanordnung gestaltet sich einfacher und Bauraum kann eingespart werden. Als besonders vorteilhaft hat es sich erwiesen, wenn in einem Gehäuse des Nadelventils eine elektromagnetische Antriebsvorrichtung, zum Verstellen einer Nadel vorgesehen ist, wobei die Nadel als Teil eines Ankerorgans der elektromagnetischen Antriebsvorrichtung ausgebildet ist. Hierbei kann die elektromagnetische Antriebsvorrichtung vorteilhafterweise ein Federelement aufweisen, dass derart auf den Anker einwirkt, dass eine Fail-Safe-Position der Nadel des Nadelventils vorgesehen ist.

In einer besonders vorteilhaften Ausführungsform der erfindungsgemäßen Rezirkulationsanordnung ist eine Turbine vorgesehen, die durch den Treibstrahl des unter Druck stehenden Gases antreibbar ist, und die mechanisch mit dem Rezirkulationsgebläse derart gekoppelt ist, dass das Rezirkulationsgebläse durch die Turbine antreibbar ist. Auf diese Weise kann die Leistung des Elektromotors zum Antrieb des Rezirkulationsgebläses stark reduziert werden und der Wirkungsgrad der Brennstoffzelle erhöht werden. Ausserdem würden die Kosten des Gesamtsystems reduziert. Der Aufbau des Ventils ermöglicht es hierbei, die Nadel so zu positionieren, dass sich einerseits die gewünschte Leistung an der Brennstoffzelle einstellt und andererseits die notwendige Drehzahl für das Rezirkulationsgebläse erreicht wird.

In einer weiteren vorteilhaften Ausführungsform ist die Strahlvorrichtung als Strahlpumpe ausgeführt, wobei der Ausgang des Rezirkulationsgebläses und/oder ein zweiter Anodenausgang mit einem Sauganschluss der Saugstrahlpumpe verbunden ist. Bei dieser Ausführungsform wird die Saugstrahlvorrichtung auch noch als Saugstrahlpumpe genutzt.

Ein Ausführungsbeispiel der Erfindung ist in der Zeichnung dargestellt und wird nachfolgend beschrieben. Hierbei zeigt
Fig. 1 eine schematische Darstellung einer Ausführungsform der erfindungsgemäßen Rezirkulationsanordnung, und
Fig. 2 eine Schnittdarstellung eines variablen Nadelventils.

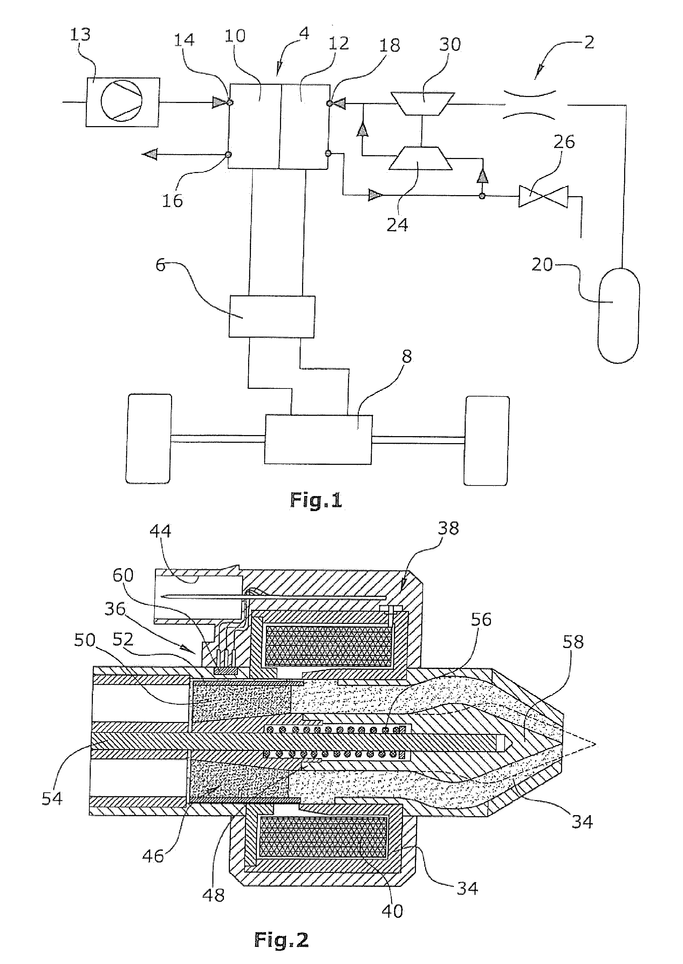

Fig. 1 zeigt eine erfindungsgemäße Rezirkulationsanordnung 2 zur Rezirkulation von Anodenabgasen einer Brennstoffzelle 4. Die von der Brennstoffzelle 4 erzeugte elektrische Energie wird über eine Steuereinheit 6 auf bekannte Weise zu einer Antriebseinheit 8 geführt.

Die Brennstoffzelle 4 besteht im Wesentlichen aus einem Kathodenraum 10 und einem Anodenraum 12. Der Kathodenraum 10 wird durch eine Vorrichtung 13 über einen Kathodeneingang 14 mit Luft versorgt. Die verbrauchte Luft verlässt den Kathodenraum 10 über einen Kathodenausgang 16.

Der Anodenraum 12 verfügt über einen Anodeneingang 18, über den im vorliegenden Fall Wasserstoff aus einem Druckspeicher 20 (Druck = ca. 700 bar) zusammen mit rezirkuliertem Abgas in den Anodenraum 12 geführt werden. Das Anodenabgas, das zum Teil noch nicht verbrauchten Wasserstoff aufweist, verlässt über einen Anodenausgang 22 den Anodenraum. Vom Anodenausgang wird das Anodenabgas zu einem Rezirkulationsgebläse 24 geführt, das es wiederum zum Anodenraumeinlass führt. Wasser und Inertgas werden beispielsweise durch ein sogenanntes Drain/Purge-Ventil 26 abgelassen.

Der Wasserstoff aus dem Druckspeicher 20 wird über ein Druckminderventil 21 (Reduzierung des Drucks auf ca. 7 bar) durch eine Strahlvorrichtung 28 als Treibstrahl mit einem Druck von ca. 3 bar dem Anodeneingang zugeführt. Im vorliegenden Ausführungsbeispiel wird durch den Treibstrahl eine Freistrahlturbine 30 angetrieben, die wiederum über eine mechanische Kupplung 32 mit dem Rezirkulationsgebläse 24 verbunden ist. Die Freistrahlturbine 30 kann natürlich auch mit einem Elektromotor verbunden sein, der wiederum das Rezirkulationsgebläse 24 antreibt. Der Antrieb des Rezirkulationsgebläses 24 durch die Freistrahlturbine 30 wird dadurch ermöglicht, dass aufgrund der bestehenden Druckverhältnisse immer ein überkritisches Druckverhältnis vorliegt, sodass im engsten Querschitt einer Düse 34 der Strahlvorrichtung 28 der Wasserstoff immer mit Schallgeschwindigkeit austritt und somit eine potenzielle in eine kinetische Energie gewandelt wird.

Es ist natürlich auch denkbar, dass die Strahlvorrichtung als Strahlpumpe ausgeführt ist, wobei das Rezirkulationsgebläse und/oder ein zweiter Anodenausgang direkt mit einem Sauganschluss der Saugstrahlpumpe verbunden wäre. Hierdurch könnte das Rezirkulationsgebläse noch kleiner ausgeführt werden.

Fig. 2 zeigt eine Strahlvorrichtung 28 ausgeführt als Nadelventil mit der Düse 34. Dieses Nadelventil weist auf bekannte Weise ein Gehäuse 36 auf, in dem ein elektromagnetischer Antrieb 38 angeordnet ist. Der elektromagnetische Antrieb besteht auf bekannte Weise aus einer Spule 40, einer magnetischen Rückschlusseinrichtung 42, einem Elektrostecker 44 zur elektrischen Versorgung der Spule 40 sowie einem Ankerorgan 46, das beweglich im Gehäuse 36 gelagert ist. Eine Nadel 48 ist zweiteilig ausgeführt und über Verstrebungen 50 mit einem kreisringförmigen Ankerlagerteil 52 verbunden. Die Nadel 48, die Verstrebungen 46 sowie das ringförmige Ankerlagerteil 52 bilden somit das Ankerorgan 50. Die Nadel 48 ist auf einem fest im Gehäuse angeordneten Stift 54 angeordnet. In der Nadel 48 ist eine Feder 56 angeordnet, was durch die Zweiteiligkeit der Nadel 48 ermöglicht wird, wobei die Feder 56 sich derart gegen den Stift 54 abstützt, dass die Nadel 48 in maximal Offenstellung der Düse 34 vorgespannt ist. Diese Vorspannung beschreibt dann auch eine Fail-Safe-Position. Ein Maximalhub des Ankers 46 ist so ausgelegt, dass eine Nadelspitze 58 einen Minimalquerschnitt der Düse 34 frei lässt. Die Maximalstellung der Nadel 48 bzw. der Nadelspitze 58 ist in durchgezogenen Linien dargestellt, die Mimimalstellung der Nadel 48 bzw. der Nadelspitzen 58 ist in gestrichelten Linien dargestellt. Je nach Anwendungsfall ist es natürlich auch möglich, die Feder 56 so anzuordnen, dass die Fail-Safe-Position lediglich den engsten Querschnitt der Düse 34 offen lässt.

Bei Bestromung des elektromagnetischen Antriebs 38 wird ein elektromagnetisches Feld erzeugt, das den Anker 46 und damit die Nadel 48 in Richtung Düse 34 bewegt. Im Gehäuse ist desweiteren noch ein Sensor 60 vorgesehen, der die Hubverstellung des Ankers 46 überwacht.

Auf diese Weise ist der Massenstrom des Wasserstoffs durch die Strahlvorrichtung einfach und genau zu regeln. Desweiteren wird eine Leistungsregelung des Rezirkulationsgebläses 24 auf besonders einfache und energieeffiziente Weise ermöglicht.

## Patentansprüche

1. Rezirkulationsanordnung zur Rezirkulation von Anodenabgasen einer Brennstoffzelle (4) mit einem Rezirkulationsgebläse (24) und mindestens einer von einem Treibstrahl eines unter Druck stehenden Gases angetriebenen Strahlvorrichtung (28), wobei ein Anodenausgang (22) der Brennstoffzelle (4) mit einem Eingang des Rezirkulationsgebläses (24) fluidisch verbunden ist, ein Ausgang des Rezirkulationsgebläses (24) mit einem Anodeneingang (18) der Brennstoffzelle (4) fluidisch verbunden ist und ein Ausgang der Strahlvorrichtung (28) fluidisch mit einem Anodeneingang (18) der Brennstoffzelle (4) verbunden ist, **dadurch gekennzeichnet, dass** die Strahlvorrichtung (18) als variables Nadelventil ausgeführt ist.

2. Rezirkulationsanordnung nach Anspruch 1, **dadurch gekennzeichnet, dass** in einem Gehäuse (36) des Nadelventils eine elektromagnetische Antriebsvorrichtung (38) zum Verstellen einer Nadel (48) vorgesehen ist, wobei die Nadel (48) als Teil eines Ankerorgans (46) der elektromagnetischen Antriebsvorrichtung (38) ausgebildet ist.

3. Rezirkulationsanordnung nach Anspruch 2, **dadurch gekennzeichnet, dass** die elektromagnetische Antriebsvorrichtung (38) ein Federelement (56) aufweist, das derart auf den Anker (46) einwirkt, dass eine Fail-Safe-Position der Nadel (48) des Nadelventils vorgesehen ist.

4. Rezirkulationsanordnung nach einem der vorhergehenden Ansprüche, **dadurch gekennzeichnet, dass** eine Turbine (30) vorgesehen ist, die durch den Treibstrahl des unter Druck stehenden Gases antreibbar ist, und die mechanisch mit dem Rezirkulationsgebläse (24) derart gekoppelt ist, dass das Rezirkulationsgebläse (24) durch die Turbine (30) antreibbar ist.

5. Rezirkulationsanordnung nach einem der vorhergehenden Ansprüche, **dadurch gekennzeichnet, dass** die Strahlvorrichtung (28) als Strahlpumpe ausgeführt ist, wobei der Ausgang des Rezirkulationsgebläses (24) und/oder ein zweiter Anodenausgang mit einem Sauganschluss der Saugstrahlpumpe (28) verbunden ist.
